(19) Europäisches Patentamt

European Patent Office

Office européen des brevets

(11) **EP 1 049 028 A2**

(12) **EUROPEAN PATENT APPLICATION**

(43) Date of publication:
02.11.2000 Bulletin 2000/44

(51) Int. Cl.[7]: **G06F 17/30**

(21) Application number: 00303504.5

(22) Date of filing: 26.04.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **26.04.1999 US 130986 P**
**25.04.2000 US 559818 P**

(71) Applicant: **Sarnoff Corporation**
**Princeton, NJ 08540-6449 (US)**

(72) Inventor: **Ihrie, David Wayne**
**Princeton Junction, NJ 08550 (US)**

(74) Representative:
**Pratt, Richard Wilson et al**
**D. Young & Co,**
**21 New Fetter Lane**
**London EC4A 1DA (GB)**

(54) **Efficient distribution of information to the end-user**

(57) A method and apparatus for selectively accelerating the delivery of data from a regional broadcaster to a local broadcaster. The present invention describes an architecture and method to economically take advantage of the broadcast nature of certain transmission channels for delivery of web data. It incorporates a two-tiered caching architecture for data, with larger, more centralized caches updating smaller, distributed caches via high speed satellite broadcasts.

FIG. 1

# Description

This application claims the benefit of U.S. Provisional Application No. 60/130,986 filed on April 26, 1999, which is herein incorporated by reference.

The invention relates to a method and apparatus for distributing data over regional broadcast transmission channels. Specifically, the present invention describes a method for selectively accelerating the delivery of data from a regional broadcaster to a local broadcaster.

## BACKGROUND OF THE DISCLOSURE

With the wide acceptance and usage of the Internet, it has become increasingly more difficult to quickly meet the demand for data from numerous users who are accessing the Internet or World Wide Web ("web") or other sources of data. Due to the vastness and complexity of the Internet, the users and their requested data may be separated by great distances, where the requested data may have to travel through a complex network of computers and data routers. Thus, a user will typically experience a significant delay in receiving the requested data, especially during peak usage periods.

Additionally, most implementations of web data distribution do not take advantage of low cost parallel configurations of commodity computers (i.e., "cluster" computers). This results in expensive storage on a unit cost basis relative to the amount of storage desirable for caching solutions, and creates computing bottlenecks both in CPU processing of simultaneous requests as well as contention and bandwidth limitations accessing cached data on disks.

Therefore, there is a need in the art for an apparatus and method for selectively accelerating the delivery of data from a regional broadcaster to a local broadcaster.

## SUMMARY OF THE INVENTION

An embodiment of the present invention is a method and apparatus for selectively accelerating the delivery of data from a regional broadcaster to a local broadcaster. Specifically, the present invention describes an architecture and method to economically take advantage of the broadcast nature of certain transmission channels for delivery of data, e.g., web data. It incorporates a two-tiered (or multi-tiered) caching architecture for data, with larger, more centralized caches updating smaller, distributed caches via high speed communication links, e.g., satellite broadcasts. The methods employed to manage this caching architecture statistically aggregate user requests at both the centralized and distributed cache levels, so that the caches are dynamically updated to contain the most requested information (rather than the most recent information).

Additionally, these methods may be hosted on cluster computers acting as web servers, thereby providing a high degree of low cost, scaleable computing and storage capability.

The result of this approach is that individual users will receive faster responses to requests for information. At the same time, local broadcasters such as Internet service providers (ISPs) will reduce their required communication bandwidth due to the large number of requests being serviced by the cache. For the web as a whole, significant reductions in duplicate traffic are realized. Thus, the present invention provides an efficient and practical system for accelerating access to web data.

## BRIEF DESCRIPTION OF THE DRAWINGS

The teachings of the present invention can be readily understood by considering the following detailed description in conjunction with the accompanying drawings, in which:

FIG. 1 illustrates a block diagram of the architecture of a system of the present invention;

FIG. 2 illustrates a block diagram of a local broadcaster of the present invention;

FIG. 3 illustrates a block diagram of a regional broadcaster of the present invention;

FIG. 4 illustrates an example of a collection of actual user hits that results in a rank-ordering of web sites by hits;

FIG. 5 illustrates a diagram that charts the number of hits per day against the names of various web sites;

FIG. 6 illustrates a diagram that charts hit probability against various categories;

FIG. 7 illustrates a diagram that charts cumulative probability against the number of sites;

FIG. 8 illustrates a diagram that shows an exponential curve fit of data;

FIG. 9 illustrates a block diagram of the caching decisions made based on dynamically calculated traffic model;

FIG. 10 illustrates a diagram that charts cumulative probability against number of documents per site;

FIG. 11 illustrates a diagram showing short term hot spots; and

FIG. 12 is a flowchart a site ranking and cache update method of the present invention.

To facilitate understanding, identical reference numerals have been used, where possible, to designate identical elements that are common to the figures.

## DETAILED DESCRIPTION

Some studies have estimated that there are currently in excess of three hundred million web pages on the World Wide Web, distributed across approximately thirty million hosts and covering an enormous range of topics. The structure of the web supports a common access mechanism for the full set of this heterogeneous collection of information.

However, by studying characteristics of the web, a method and system can be efficiently designed to selectively accelerate the delivery of data. First, the information naturally aggregates into subject areas. Most indexes of web data list twenty to forty top level subject areas, into which all web sites are distributed.

Second, user behavior in accessing this information is much more homogeneous than the information itself. At every level of collected information (pages within a site, sites within a category, among categories, and for the web as a whole), user behavior is highly aggregated so that a very small portion of each collection of information accounts for a very large portion of the total requests for information of that type.

To illustrate, using six hundred million page requests per day ("hits") on the web as an example, an even distribution across the three hundred million pages would result in an average of two hits per page per day, and would require one hundred fifty million pages stored to account for half the total number of requests. However, in practice, it appears that more like twenty five percent of hits per day are directed to the top five thousand pages (0.002% of total available pages), and fifty percent of hits are directed to the top 1.6 million pages (0.5% of total available pages). This very high degree of aggregation implies a high degree of redundancy in the traffic across the web, and indicates that caching is an effective strategy for handling this traffic.

In order to be effective, the caching implementation will play an important role. Many traditional implementations of caching use "most recent request" as a key metric for determining the information in cache. This metric is simple in that it treats each user request independently, storing all recent user requests up to some predetermined memory limit. However, this metric does not optimize cache contents based on the total population of user requests, and has no inherent mechanism for determining when information must be updated. More sophisticated approaches as discussed below will aggregate user statistics across a small population of users, and then this commonality is exploited in the distribution mechanism.

In sum, the present system increases system effectiveness by collecting statistics across populations of users, implementing "most requested" as the dynamic caching metric, separating the caching architecture into two levels (multi-levels) connected by high speed satellite links so that commonalties across separate populations of users (e.g., users with separate ISPs in a single geographic area) are updated via broadcast rather than point-to-point distribution of information, and explicitly addressing the currency of information separately from decisions about which information to include in the cache.

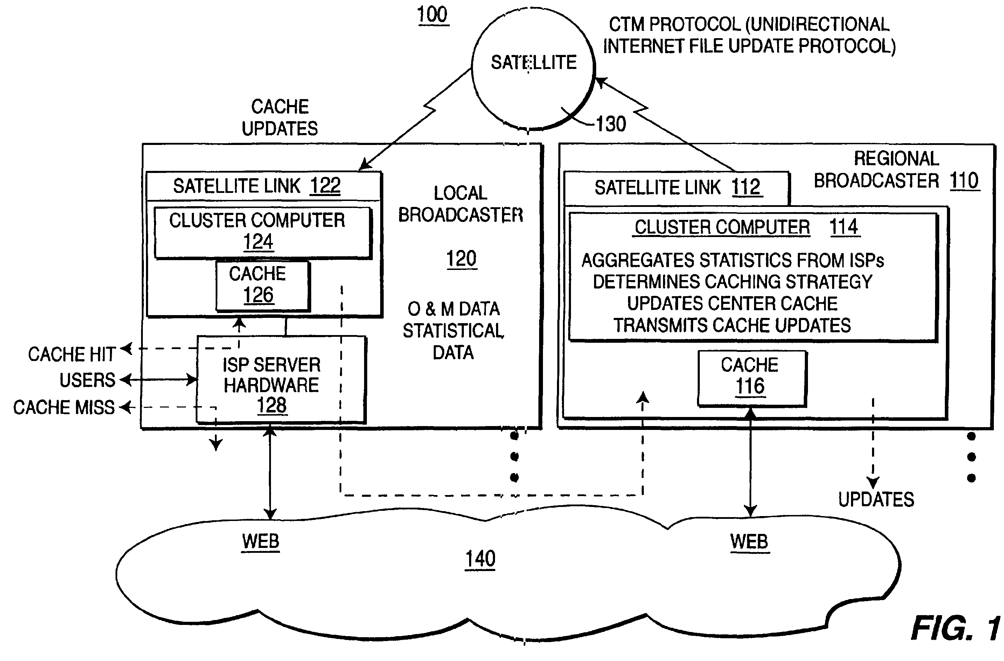

FIG. 1 illustrates a block diagram of the architecture of a system 100 of the present invention. System 100 comprises one or more regional or centralized broadcasters 110 and one or more local broadcasters 120. The local broadcaster 120 is in communication with the regional or centralized broadcaster 110 through two different communication channels. The first channel 130 is a high speed communication link, e.g., the preferred communication link is via a high speed satellite link. In contrast, the second channel 140 is a lower speed communication link, e.g., the Internet, terrestrial and the like.

Although the present invention is described below in view of a two-tiered architecture, it should be understood that the present invention can be implemented as a multi-tiered system having a plurality of levels. Thus, the present invention which describes a regional and local broadcasters can be extended to include additional levels of entities, e.g., having an end user with a third cache on a PC that communicates with the caches of the regional and/or local broadcasters as described below.

In one embodiment, the regional broadcaster 110 comprises a "centralized cache" 116 deployed with a large cluster computer 114 (or similar capability computing architecture) at a centralized location. The regional broadcaster 110 is, in turn, connected via a satellite link 112 to a broadcast satellite 130 (or similar broadcast communication channel) to one or more local broadcasters 120. Additionally, the regional broadcaster 110 has broadband terrestrial access to the web for establishing and updating the centralized cache located at its center.

Each local broadcaster 120 comprises a local cache 126 deployed with a large cluster computer 124 (or similar capability computing architecture) at a localized location. In operation, each local cache is, in turn, connected via a satellite link 122 to the broadcast satellite 130 (or similar broadcast communication channel) to the centralized cache of the regional broadcaster 120. The local broadcasters 120 are effectively information re-distributors such as ISPs, cable system headends, television broadcasters, or businesses within the footprint of the satellite beam. These distributed local broadcasters 120 also have communication paths back to the regional broadcaster 110 via the web 140, (or terrestrial communication links, or other means) for transmission of statistical and operational data back to the regional broadcaster 110. Each local broadcaster 120 may also carry or is closely connected to existing web server hardware 128, which services end user requests for information through existing channels.

In operation, user requests are sent by the local web server 128 to the local cache 126, which provides the information directly to the user if it is stored on the local cache. If the data is not stored on the local cache cluster, the user request is redirected back to the actual requested web site for servicing. Additionally, the local broadcaster 120 uses individual user requests to build a statistical representation of the web pages most requested by local users.

Periodically, this information is also transmitted to the regional broadcaster 110, which aggregates statistics from a number of local broadcasters 120 to determine a global listing of the most requested pages. The regional broadcaster 110 will independently retrieve and update its centralized cache with web data based on this global ranking of pages. It also schedules and sequences transmission of this data through the satellite channel(s) 130 to the local broadcaster(s) 120.

In an alternative embodiment, the regional broadcaster 110 maintains either a single global or multiple regional lists, or a combination, and will transmit this data via either a single wide area downlink or multiple regional spot beams, depending on the capability of the selected satellite links.

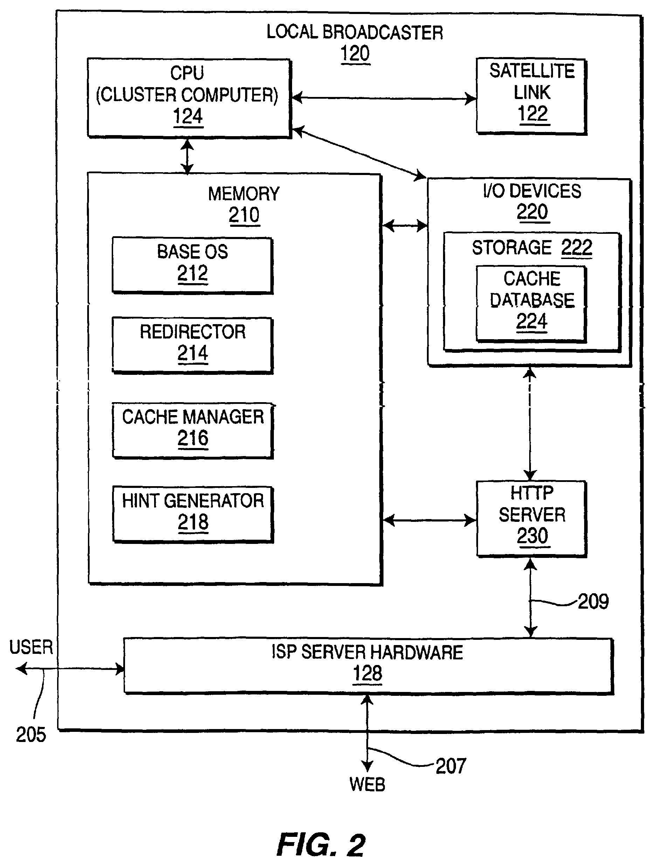

FIG. 2 illustrates a block diagram of a local broadcaster 120 of the present invention. The local broadcaster 120 illustratively comprises a central processing unit (CPU) or a cluster computer 124, a satellite link 122, a memory 210, input/output (I/O) devices 220, a http server 230, and an ISP hardware 128. It should be noted that although FIG. 2 illustrates the local broadcaster 120 as an ISP, the local broadcaster 120 can be implemented as other business entities, e.g., a cable head end or a television studio. As such, various modules illustrated in FIG. 2 can be omitted or interchanged as appropriate for a particular business application. Namely, the major functions that are described below for the local broadcaster can still be implemented regardless of the actual form of the local broadcaster.

In the preferred embodiment, the memory 210 contains a base operating system (OS) 212, redirector 214, cache manager 216 and hint generator 218. Although these modules are software modules, those skilled in the art will realize that they can be implemented as physical devices which are coupled to the CPU 124 through communication channels. Specifically, the base operating system 212, redirector 214, cache manager 216 and hint generator 218 can be represented by a software application (or a combination of software and hardware, e.g., application specific integrated circuit (ASIC))which is loaded from a storage device, e.g., a magnetic or optical disk, and resides in the memory 210 of the local broadcaster. As such, the base operating system 212, redirector 214, cache manager 216 and hint generator 218 of the present invention can be stored on a computer readable medium. Additionally, the CPU 124 can be coupled to a plurality of input and output devices 220, such as a keyboard, a mouse, a camera, a camcorder, a video monitor, any number of imaging devices or storage devices, including but not limited to, a tape drive, a floppy drive, a hard disk drive or a compact disk drive.

In operation, user requests are received on path 205 by the ISP server hardware 128. The request is first evaluated to determine if the user request can be serviced locally, i.e., whether the requested data is locally stored. The ISP server hardware then forwards the user request to a standard HTTP server via path 209, which in turn communicates with the cluster computer 124. The user request is first evaluated by a redirector (a software module) that determines if the requested data is present in the cache database 224, e.g., by performing a cache index compare operation. If the data is present, the redirector 214 will notify the cache manager 216 (a software module) to perform the necessary data retrieval. The cache manager is generally tasked with generating the cache index, loading the cache with data received from the satellite link 122, load balancing, storage and retrieval of data in the cache database and performing cache refresh. The requested data is then forwarded to the user rapidly without having to traverse the web, thereby accelerating the delivery of requested data and helping in the reduction of web traffic.

However, if the data is not present, the redirector 214 will notify the http server and, in turn, the http server will inform the ISP server hardware 128 to retrieve the data directly from the source, e.g., servicing the user request via the web on path 207. Additionally, the redirector 214 will notify the hint generator 218 (a software module) concerning the absence of the requested data in the cache database. The hint generator 218 is tasked with performing the important function of statistics gathering and cache management (local add/delete, local multi-copy). The specific methods and metrics employed by the hint generator will be discussed below in more detail.

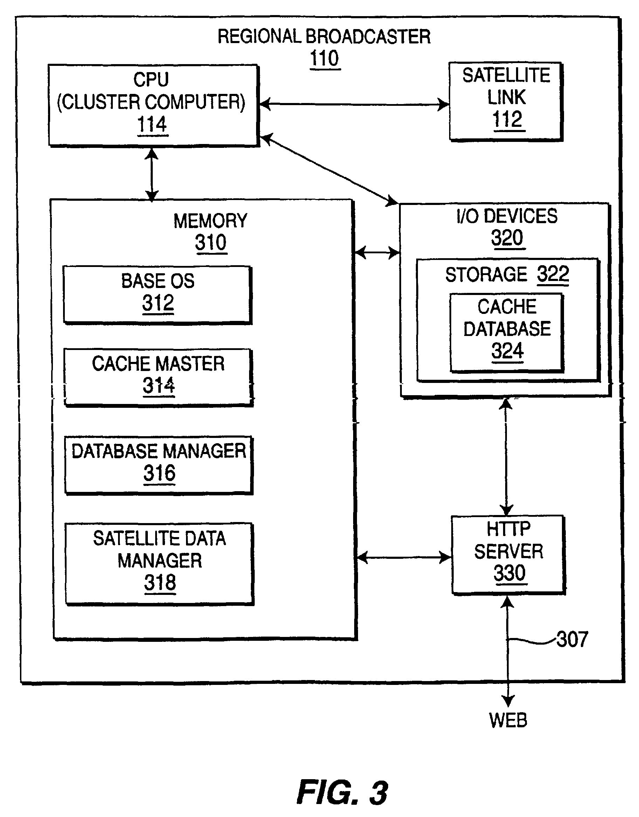

FIG. 3 illustrates a block diagram of a regional broadcaster 110 of the present invention. The regional broadcaster 110 illustratively comprises a central processing unit (CPU) or a cluster computer 114, a satellite link 112, a memory 310, input/output (I/O) devices 320, and a http server 330.

In the preferred embodiment, the memory 310 contains a base operating system (OS) 312, cache master 314, database manager 316 and satellite data manager 318. Although these modules are software modules, those skilled in the art will realize that they can be implemented as physical devices which are coupled to the CPU 114 through communication channels. Specifically, base operating system 312, cache master 314, database manager 316 and satellite data manager 318 can be represented by a software application (or a combination of software and hardware, e.g., application specific integrated circuit (ASIC) )which is loaded from a storage device, e.g., a magnetic or optical disk, and resides in the memory 310 of the local broadcaster. As such, base operating system 312, cache master 314, database manager 316 and satellite data manager 318 of the present invention can be stored on a computer readable medium. Additionally, the CPU 114 can be coupled to a plurality of input and output devices 320, such as a keyboard, a mouse, a camera, a camcorder, a video monitor, any number of imaging devices or storage devices, including but not limited to, a tape drive, a floppy drive, a hard disk drive or a compact disk drive.

In operation, inputs from various local broadcasters are received on path 307 (e.g., via the web or other communication channels) by a standard HTTP server, which in turn communicates with the cluster computer 114. The inputs from local broadcasters are predominately statistical data concerning user requests that are relevant to its locale.

The collection of statistical data is gathered and evaluated by the cache master 314. Using this collection of local statistics, the cache master 314 will update the centralized cache database 324 to reflect the most requested data. Specifically, the cache master 314 will generate an order list of data that must gather into the centralized cache and generate a schedule for their delivery to the relevant locales.

In turn, the database manager 316 will receive inputs, e.g., the order list, from the cache master 314 and will then directly gather the requested data from the web or other sources. Namely, the database manager 316 is tasked with the update of the cache database 324.

Once the requested data or portions thereof are stored in the cache database, the database manager 316 will notify the cache master 314, which, in turn, will schedule or cause the satellite data manager 318 to schedule the transmission of the requested data to be broadcasted to the local broadcasters 120. The satellite data manager 318 is tasked with assembling the data stream for transmission and can communicate directly with the database manager 316 for this purpose.

Finally, several methods are important to the management of this two-level caching architecture as shown in FIG. 2 and FIG. 3. These methods include metrics for rank ordering sites visited by users according to measured frequencies (or other metrics such as most requested data based on revenue generated instead of frequency of hits alone), mechanisms for using those metrics in adding and deleting sites from the list of those sites stored in a cache; mechanisms for determining when to maintain multiple copies of information in a cache and how many copies to maintain; mechanisms for determining how many pages within a site to include in the cache (and when to add or delete pages); and mechanisms for scheduling the broadcast of information from the regional broadcaster 110 for local cache updates. Although web sites are used as an example in describing the methods below, it should be understood that the "content elements" of the data can be web sites, video programs, audio tracks, software applications, private databases and the like. These methods are now described below.

Site Ranking Method with Cache Addition and Deletion

The caching decisions in this architecture are made on the basis of site ranking metrics which, in turn, are used to determine when new web sites must be added to the cache and when existing sites in the cache should be eliminated. Within the architecture, a version of this method will operate at both local cache clusters and at the higher level regional or centralized cache cluster providing the broadcast uplink. Even though the same methods will operate at the two locations, the user statistics and thus rankings may be different, since regional sites (regional broadcasters) will aggregate statistics from multiple local sites (local broadcasters).

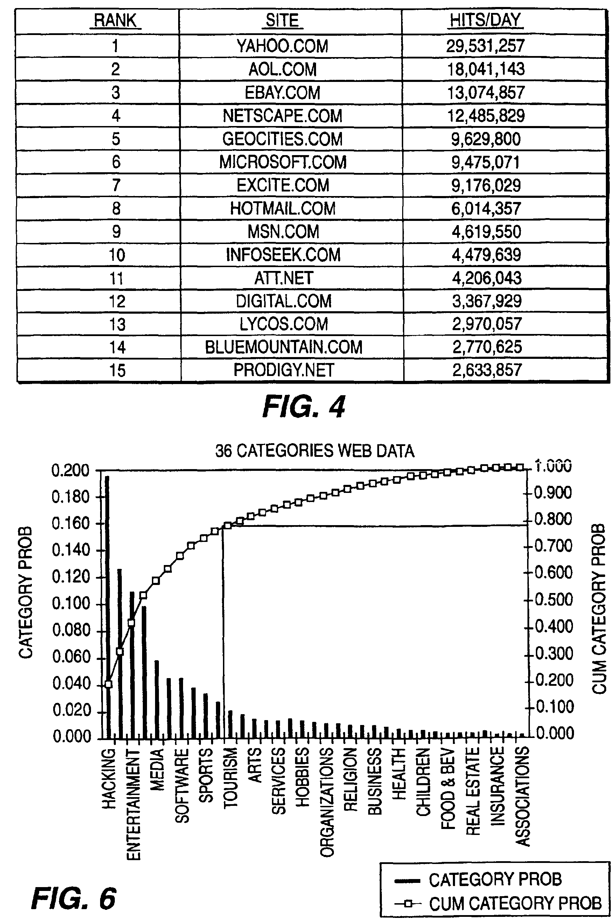

The starting point for this method is the collection of actual user hits by individual sites (e.g., total requests for any page within each site, including reloads, revisits and other duplications of page requests by users). FIG. 4 illustrates an example of a collection of actual user hits that results in a rank-ordering of web sites by hits. In this example, however, the hits collected are those seen by individual ISPs or web servers.

Typically, these hits would be used directly as the basis for caching decisions. In the present invention, the hits are aggregated to produce a traffic model, and it is the model which drives the local caching activity. Additionally, the rank-ordered list of sites and hits is forwarded periodically to the regional broadcaster 110 from each ISP 120, where the data from all ISPs are aggregated into a master list with different characteristics than any of the lower tier lists.

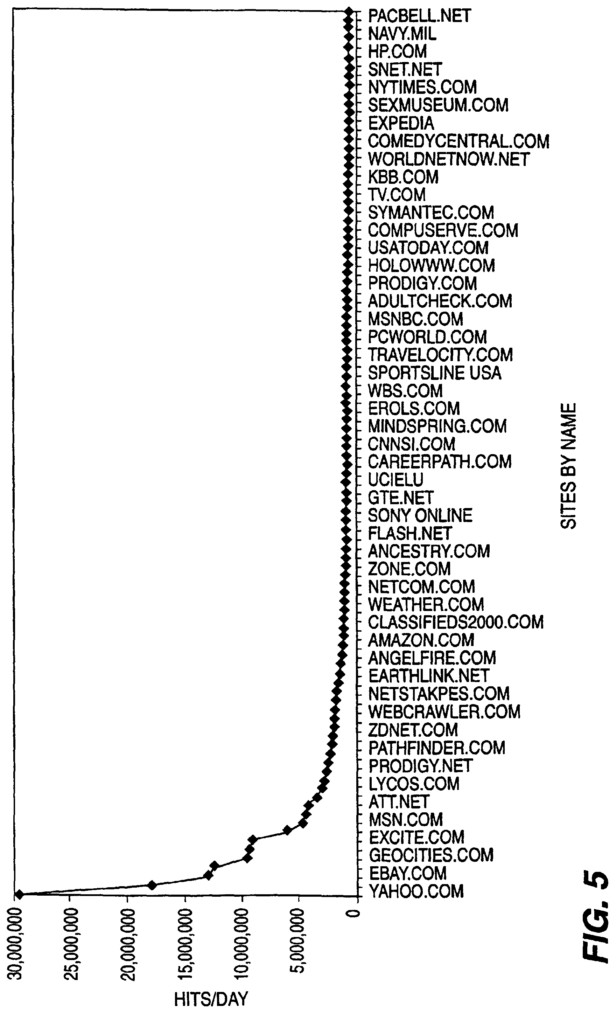

The traffic model is based on several observations about traffic characteristics on the web (data in the following figures is derived from actual web measurements and observations). First, traffic is highly concentrated, with total site hits falling off rapidly after the top few sites. FIG. 5 illustrates this observation by providing a diagram that chart the number of hits per day against the names of various web sites.

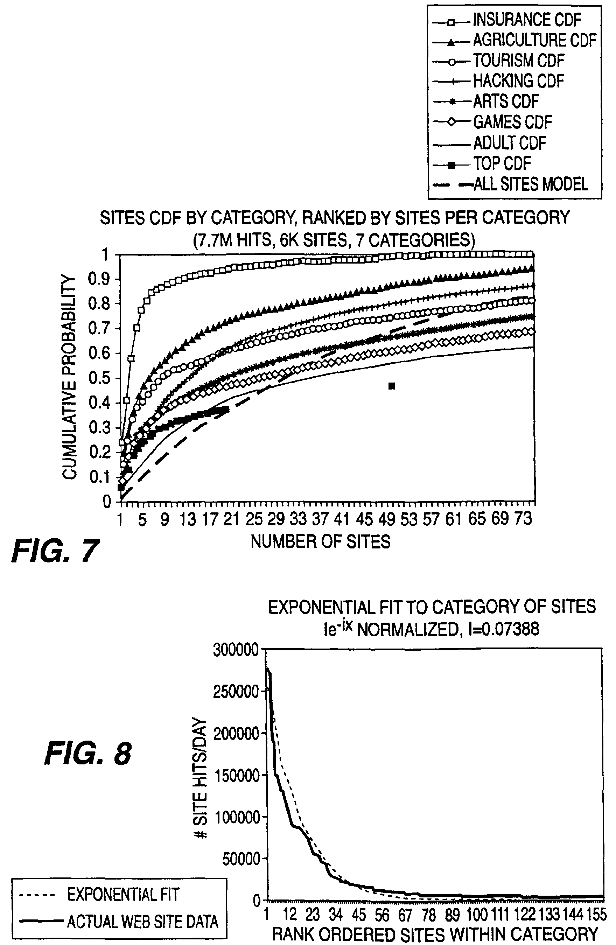

Second, most major search or reference sites on the web categorize content into 20 to 40 categories, and both the hits across categories as well as hits to sites within each category are also highly concentrated. For example, FIG. 6 illustrates a diagram that chart hit probability against various categories with the data showing that the top ten categories account for approximately 80% of the total amount of hits. Similarly, FIG. 7 illustrates a diagram that charts cumulative probability against the number of sites with the data showing that sites within categories are also highly concentrated. The conclusion is that at every level of detail investigated, an exponential curve provides a good fit to the data, although other curve fits (e.g., piece-wise linear, or inverse Gaussian) will also work in this context).

As an example, an exponential curve fit is calculated using a standard approach such as LMS (least mean square), based on individual site probabilities calculated using observed hits per site divided by total collected hits. The resulting curve is then used as the basis for calculating individual site probabilities. This process is illustrated in FIG. 8. These probabilities are the actual metric used for determining when to add and delete sites from the long term cache (local cache 126) list on each web server.

The description of the Site Ranking method with Cache Addition and Deletion has provided data to indicate that web site hits as a fraction of total hits sampled can be rank ordered by site and curve fitted using standard techniques. Additionally, the data provided support the contention that an exponential curve or similar mathematical construct provides a good fit to measured data at three levels: the web as a whole, categories of sites that form subsets of the web, and individual site within larger categories.

Next, methods by which sites can be grouped into categories are described. This is followed by a description of the method that uses these exponential models of sites, categories, and the web to make caching decisions.

For caching purposes, division of web sites into categories provides some functional advantages. These advantages include smaller lists of sites for individual sorting operations (vs. a single large list); scaleable resolution so that curve fit probabilities at low levels of traffic maintain significance; and a better match to actual traffic characteristics and categorization approaches on the web. Several potential mechanisms are available for categorization, including external categorization of sites, site specific descriptors such as those used by filtering programs, or link strength analysis where links to other sites are analyzed for clustering of sites according to their cross-linking structures.

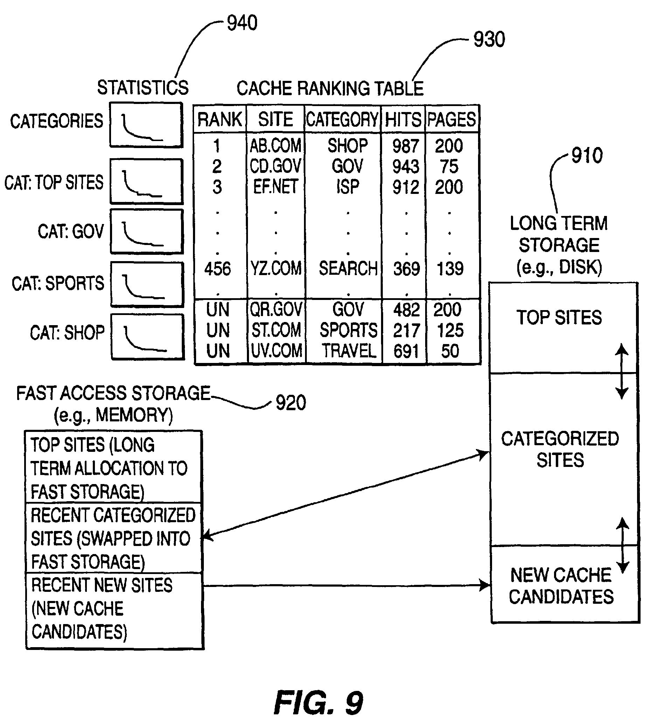

FIG. 9 illustrates a block diagram of the caching decisions made based on dynamically calculated traffic model. FIG. 9 provides a flow diagram for this method, which is characterized by its use of derived metrics rather than raw hit data, and its multi-level structure (e.g., Top N Sites versus lower traffic categories; note however that the case of a single ordered list and curve fit will also work for the caching architecture). Several benefits of this approach include its stability (lack of thrashing) due to the abstraction of the traffic characteristics, its ability to support higher level cache management policies (e.g., selective cache update rates, controllable storage allocations for various aspects of the caching structure), its ability to additionally provide an index to cache contents, and its operation within the context of the two-level satellite connected cache architecture.

The method for cache management in a single server or cluster illustrated in FIG. 9 starts with the traditional computer caching mechanism, where recently requested information is brought from long term storage (such as a disk) into fast access short term storage (such as RAM). This traditional approach uses recency of request up to the storage limits of short and long term storage as its cache management technique, adding recent pages and deleting pages least recently accessed. In the present invention, recency of request is still used for bringing information from long term storage 910 into a fast access storage 920, e.g., RAM, but is replaced by probability of hit as the metric for adding sites to the long term storage cache. Thus, requested sites that are not already in cache will be added if they increase the overall hit rate for the cache.

The method assumes that each site previously stored in cache has been rank ordered within its category based on previous hit data, categories have also been ranked based on previous total hits for sites in the category, and each category as well as categories overall have been fit with appropriate (e.g., exponential) curves. Note that this approach includes the degenerate case of only a single category containing all sites, in which case the ranking among categories is not required.

Additionally, in the current data collection period, site hit statistics (number of hits to site during current period) are maintained (in the cache ranking table 930 of FIG. 9) for both previously cached and for uncached sites requested by users. The total number of pages cached for each site is also maintained, along with an indicator whether this total number is all the pages contained in the site. These statistics form the basis for adding sites and deleting pages at the end of the current data collection period. Finally, user requests for sites not previously cached are copied into a temporary area of long term storage so that they are not lost even if they fall outside the recency criterion in the fast access storage.

Several criteria may be chosen to determine the extent of a data collection period, which determines the frequency of cache ranking updates. These criteria include the time duration (e.g., four hours), number of new candidate sites, storage size of new candidate sites, changes in cache hit rate (e.g., below some absolute threshold, or a change in hit rate since the last period of some delta percent), etc. When a data collection period has ended, the ranking and site addition portion of the method is executed.

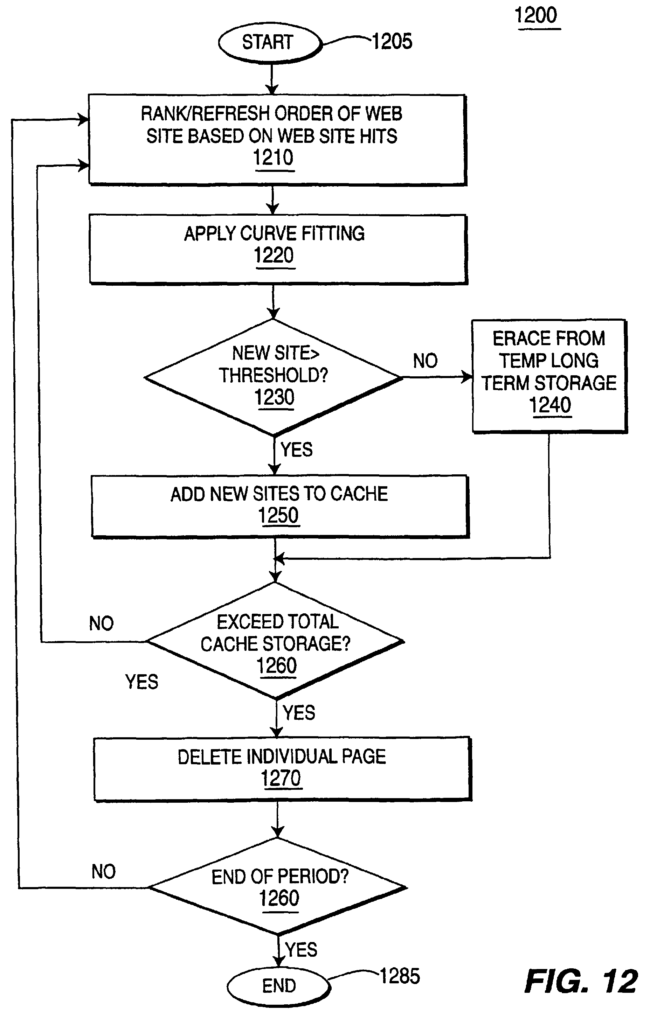

FIG. 12 is a flowchart that summaries the above site ranking and cache update method 1200. Method 1200 starts in step 1205 and proceeds to step 1210 where statistics concerning web sites requested by users (including newly requested sites) are ranked or re-ranked according to site hits in the last data collection period. Specifically, re-ranking of the sites is a sort operation, with sites sorted by category on the basis of total site hits during the last data collection period.

Using the newly updated ranking, method 1200 in step 1220 applies curing fitting to obtain new curve fits that are performed within each category and across different categories. Curve fits are performed using standard techniques such as Least Mean Squared (LMS) fits of exponential curves.

In step 1230, method 1200 queries whether a newly requested web site exceeds a threshold that will allow the newly requested web site to be added to the cache. If the query is affirmatively answered, then method 1200 proceeds to step 1250, where the newly requested site is added to the cache. If the query is negatively answered, then method 1200 proceeds to step 1240, where the newly requested site is erased or removed from the temporary long term storage.

In step 1260, method 1200 queries whether the newly added requested web site(s) to the cache will cause the total cache storage to be exceeded. If the query is affirmatively answered, then method 1200 proceeds to step 1270, where a pruning or web page removal operation is performed to remove certain sites or pages from the cache to provide space for the newly added sites. If the query is negatively answered, then method 1200 returns to step 1210.

Namely, for steps 1230-1270, new sites above a threshold probability are added to the cache, and those below the threshold are erased from the temporary long term storage. It should be noted that individual pages (and preferably not sites) are deleted from cache based on lowest probability until the total cache storage is below a storage limit.

Specifically, the decision to add a new site to cache or remove it from consideration is based on a threshold probability, where a site's probability is determined by the product of its category ranking probability and its site ranking probability within the category. For each of these probabilities, the category or site rank is used as an ordinal input to the curve fit, with the curve providing the actual probability. Thus if Category I has j Sites, the overall site probability for site k, $P(S_{I,k})$ is given by:

$$P(S_{I,k}) = P(C_I) X P(S_j(k)) \qquad (1)$$

where $C_I$ is the calculated category probability curve, and $S_j(k)$ is the calculated site probability curve.

The threshold probability may be set relative to either the entire cache or just the site category, and may be predetermined or calculated based on prior data collection period probabilities. When a site is added to cache, the method specifies that all pages accessed for that site be added to cache as a block. Individual page deletion is accomplished using the method described below. Specifically, sites are generally added as a whole but will be deleted or pruned on a page by page basis as needed.

Returning to FIG. 12, method 1200 queries whether an update period has expired. If the query is affirmatively answered, then method 1200 ends in step 1285. If the query is negatively answered, then method 1200 returns to step 1210. Namely, the present invention can be implemented with a predefined data collection or cache update period. At the end of this period, cleanup operations, e.g., transmitting the updated hit data to the regional broadcaster 110, updating the cache access index, and resetting the hit counters for the next data collection period can be performed. At this point, the process of FIG. 12 begins again.

Method for Storing Pages Within a Site

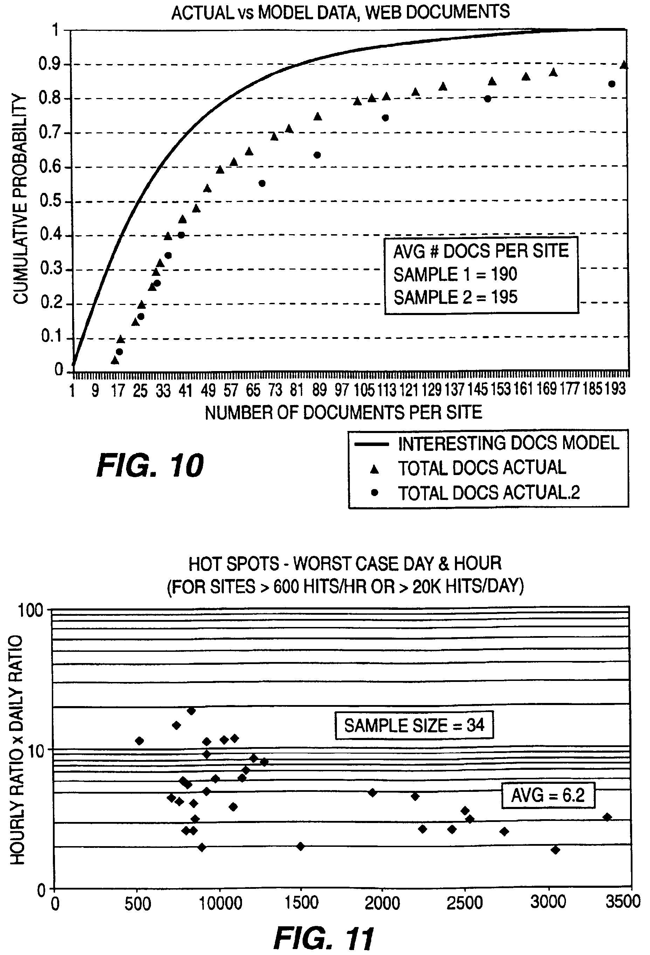

As for the web as a whole, traffic to individual pages within a single web site is also highly concentrated (again well modeled by an exponential curve fit). FIG. 10 illustrates a diagram that charts cumulative probability against number of documents per site.

Data indicates that 90% of all page hits to sites are captured within the top 200 pages of each site, independent of site size (obviously sites with fewer than 200 total pages capture 100% of page hits within that limit). One metric of the present invention dynamically calculates probabilities for individual pages within each site using an approach similar to that described above for curve fitting to the overall site hit data. A more preferred approach that uses significantly less memory and computation defines a static page index probability curve, $P_k$ (such as an exponential with 90% of the cumulative probability at 200 pages) that is used for the assumed distribution of pages within all sites. Other metrics are also possible for use with this method.

This method is used in the context of the Site Ranking method described above. This method is invoked at the point where the site ranking method has completed determination of which new sites to add into the cache. Thus, the method has two key functions: first, it must determine how many and which pages to delete from cache to restore the cache size to some predetermined value; second, it may be used to improve cache performance at the margin by adding higher probability pages to a site while at the same time deleting lower probability pages elsewhere in the cache.

For either function, the method calculates probability of a specific page in a specific site being accessed by multiplying the page index probability by the site probability. Thus if Category I has j Sites, and Site j has at least k pages in cache, the overall page probability for page k, $P(p_{I,j,k})$ is given by:

$$P(p_{I,j,k}) = P(C_I) X P(S_j) X P(P_k) \qquad (2)$$

where $C_I$ is the calculated category probability curve, $S_j$ is the calculated site probability curve, and $P_k$ is the static page index probability curve.

For the page deletion function, pages are deleted from cache as necessary to return the total cache size to its steady state value. A mechanism for accomplishing this is to calculate the page probability for the last page of each site in cache, delete the lowest probability page of these, and calculate the new page probability for the k-1 page of the site whose page was deleted. This process can be continued until the desired cache size is reached.

An additional page is cached for a site already in cache only if the probability of the new page is higher than the probability of the least probable page in at least one other cached site. In this case, the new page is added and the lower probability page in the other site is deleted (assuming a steady state case where cache allocation is filled, requiring a page to be deleted for each page added). Thus, if the probability of the k + 1 page in a site is higher than the least probable page of some other site, the page substitution will be made.

Note that the page deletion function is most likely to delete pages from the least probable sites, while the page addition function is most likely to add pages to the most probable sites that are not already fully cached. Also note that the outcome of this method is that higher probability sites will generally have many more pages stored than lower probability sites, while the Site Ranking method will tend to delete sites with too few pages in cache.

Multiple Copy Methods

The methods described result in single copies of data in cache. The web, however, is subject to "hot spots", loosely defined as sites or pages where the high level of user requests in a short period of time indicate that multiple copies in cache may be desirable. This method assumes that the computer cluster operating system will perform the functions associated with physically duplicating and storing multiple copies of data once the number of copies required is specified. Two kinds of hot spots have been determined to exist, short term and long term.

A long term hot spot is defined as a web site with a high long term average number of hits, to the extent that the cache should routinely maintain more than one copy of site information so that access to that information within the cache does not become a system performance bottleneck. The cache response to long term hot spots is tracking of long term averages on something likely a daily basis, with appropriate updates in storage duplication at that time. Over time, the requirement for duplicate storage of long term hot spot sites may drive the overall sizing of the long term cache storage.

Long term duplication of information in a cache is driven by several factors: reduction of bottlenecks due to either CPU or memory access latencies (particularly multiple simultaneous access requests), reliability and load leveling considerations in the cache, and the tradeoff between these factors and total storage requirements.

If service speed S, in Mbytes/sec, is the minimum of CPU throughput and memory throughput in a computing node, and request size B, in Kbytes, is the average user request size, then the raw user response rate is 1000*S/B request serviced per second. Then, if $P_r$ is the reliability factor defining the maximum percentage of requests processed on a single cluster node, and $P_s$ is a derating factor for short term hot spots in the cluster node, the total threshold value, $H_t$ can be calculated as:

$$H_t = P_r X P_s X 1000*S/B \qquad (3)$$

For example, if S = 10 MB/s, B = 50KB, $P_r$ = 0.25, and $P_s$ = 0.4, the node can process an average 200 request per second, the short term derating factor would limit this average to 80 requests per second, and the reliability factor would allow only 25% or 20 requests per second on a single cluster processing node. In this example, the 20 requests per second translates to approximately 1.7 million hits per day before additional copies of information would be required. Note that the long term predictions for web traffic include a rapid increase in digital video, with file sizes on the order of megabytes or more. This change will alter the ratio of user requests to response time as indicated by the above equation, so that an average file size of 1 MB with all other factors remaining the same would lead to a limit of 1 request per second, or only 86,400 requests per day before requiring multiple copies.

The above equation includes the derating term for short term hot spots. A short term hot spot is defined as a web site where daily or hourly variations coincide to produce large traffic peaks over short periods of time. Here the appropriate cache response is dynamic duplication of information already in cache, followed by deletion of duplicate copies when the short term traffic subsides.

FIG. 11 illustrates a diagram that provides data that indicates that short term hot spots may result in peak hit rates that are a factor of ten to twenty higher than nominal hit rates, and average more than five times the nominal site hit rate. Although the multipliers are potentially large, the small percentage of sites that become short term hot spots at one time and short duration of this status mean that a relatively small allocation of long term storage suffices to handle short term hot spots. Maintaining additional data in the Cache Ranking Table on long term average hits by site provides a metric for both the long and short term portions of this method.

Broadcast Scheduling methods

Each of the preceding methods collectively serve to decouple the local caching activity from a higher level, centralized cache that provides broadcast updates. The flow and aggregation of statistical data from local to regional cache sites ensures that the traffic model formed at the regional site is current and accurate, but removes the requirement from the regional site to respond directly to individual user requests. As a result, the regional site can independently schedule its broadcast stream in a manner that relies primarily on the update rates of the underlying information rather than on a continuous series of request contending in real time for constrained satellite bandwidth.

The broadcast site receives and aggregates web site hit data from each of the web servers in the satellite receive footprint for that broadcast site. With this aggregation of data, the broadcast site also calculates its own web site ranking, using the Site Ranking method above. Because the broadcast web site does not respond directly to user requests, it will not have copies of information for new sites appearing on the ranking list. For these sites, the broadcast scheduler must generate a request to its web server software to access and cache the new sites.

Given this aggregated, ranked list of information needed by local sites, the broadcast manager has the dual functions of maintaining its own cache current with the source sites of information, and queuing this data in a timely manner for transmission over the satellite link. Note that the broadcast manager, as a result of aggregating lower level data, may have a longer list of relevant sites than any individual local ISP. This entire list may be scheduled by the broadcast manager, with local ISPs ignoring information in the broadcast stream not within the threshold of interest for the ISP.

Again for this function, a cache management table is the preferred mechanism. This table tracks not only the hit data of the Cache Ranking Table in Figure 9, but also indicators for streaming variable (e.g., cgi.bin), executable (e.g., applet), html, fixed data, and other data types within pages; necessary update rate; and time since last updated. The method, which operates for both data retrieval to the central/regional cache and for broadcast scheduling to the local ISP caches, schedules a series of requests or transmissions up to the available bandwidth of the relevant link (terrestrial to the web, or satellite for the broadcast).

The method first allocates fixed bandwidth to all streaming channels in cache, up to some bandwidth limit determined by policy, in order of page probability for those pages with streaming data. Next, data is scheduled for update or transmission sequentially on the basis of page probability, independent of required update rate for the data. It is presumed that the transmission bandwidth of the system is sized to update all cached data at least once per update period; the update period will be calculated based on the size of the cache and the communication bandwidth available.

Finally a swapping method adds additional request/transmissions for data, in order of weighted page probability, by sliding all subsequent scheduled items to a later time and inserting the additional requests/transmissions. The weighting is done on the basis of total requests/transmissions per update period; the weighting is the inverse of this total number. Thus, if the update rate for a series of specific pages is $P_I$ and each page currently has $N_I$ requests/transmissions scheduled, the method will add additional requests/transmissions for a page as long as the condition

$$P_i/N_{j+1} > P_j/N_k \text{ for any j,k} \qquad (4)$$

is met. This substitution process can continue until the total bandwidth of requests/transmissions is utilized. Thus, as long as bandwidth is available, a site that has ten times higher page probability than another will have additional requests/transmissions scheduled until its required rate is met or until ten requests/transmissions have been scheduled into the system, prior to a second request/transmission being added for the tower probability site.

It should be noted that the use of cluster computers such as the Sarnoff cluster to provide both local and regional caching web servers connected by a high speed satellite link are important, possibly incorporating spot beams. This configuration provides a high probability of servicing a user data request due to its two-tier cache architecture with user request statistics aggregated locally and forwarded for additional aggregation at a regional or national level, regionally distinct data profiles due to the distributed data collection and aggregation and to the spot beam architecture of the satellite if applicable, and rapid response due to the satellite link.

Additionally, the present invention provides both individually and collectively, for determining the cache policy at both a local ISP-type server and a regional cluster server. The characterization of both access to web site and access to documents within a site, and the validation of this as an accurate metric, enables the caching algorithm to manage the overall system architecture and achieve the anticipated performance. In particular, the use of an method to produce an aggregate traffic model which in turn drives the cache process (rather than methods which use user traffic requests directly) provides a novel approach to such a multi-tier cache. The ability of this mechanism to produce effective results relies on the overall traffic characteristics seen on the web.

Although various embodiments which incorporate the teachings of the present invention have been shown and described in detail herein, those skilled in the art can readily devise many other varied embodiments that still incorporate these teachings.

## Claims

1. A method for selectively accelerating the delivery of data from a regional broadcaster to a local broadcaster, said method comprising the steps of:

    (a) maintaining a local cache at the local broadcaster;

(b) maintaining a centralized cache at the regional broadcaster; and

(c) updating said local cache with said centralized cache.

**2.** The method of claim 1, wherein said maintaining step (a) maintains said local cache in accordance with a metric that is based on most requested information from users of said local broadcaster.

**3.** The method of claim 2, wherein said maintaining step (a) comprises the steps of:

(a1) rank ordering of a web content element having a plurality of units;

(a2) applying curve fining to said rank order; and

(a3) applying a threshold to said resulting fitted curve to determine if a newly requested unit of said web content element is to be added to said local cache.

**4.** An apparatus for selectively accelerating the delivery of data from a regional broadcaster to a local broadcaster, said apparatus comprising:

a local broadcaster having a local cache; and

a regional broadcaster having a centralized cache, wherein said local cache is updated with said centralized cache.

**5.** A computer-readable medium having stored thereon a plurality of instructions, the plurality of instructions including instructions which, when executed by a processor, cause the processor to perform the steps comprising of:

(a) maintaining a local cache at the local broadcaster;

(b) maintaining a centralized cache at the regional broadcaster; and

(c) updating said local cache with said centralized cache.

**6.** A method for selectively accelerating the delivery of data from a local broadcaster to its users, said method comprising the steps of:

(a) maintaining a local cache at the local broadcaster; and

(b) updating said local cache in accordance with a metric that is based on most requested information from the users of said local broadcaster.

**7.** An apparatus for selectively accelerating the delivery of data from a local broadcaster to its users, said apparatus comprising:

a local cache; and

a cache manager, coupled to said local cache, for updating said local cache in accordance with a metric that is based on most requested information from the users of said local broadcaster.

**8.** A computer-readable medium having stored thereon a plurality of instructions, the plurality of instructions including instructions which, when executed by a processor, cause the processor to perform the steps comprising of:

(a) maintaining a local cache at the local broadcaster; and

(b) updating said local cache in accordance with a metric that is based on most requested information from the users of said local broadcaster.

**9.** A method for selectively accelerating the delivery of data from a regional broadcaster to its local broadcaster, said method comprising the steps of:

(a) maintaining a centralized cache at the regional broadcaster; and

(b) updating said centralized cache in accordance with a metric that is based on most requested information from said local broadcaster.

**10.** An apparatus for selectively accelerating the delivery of data from a regional broadcaster to its local broadcaster, said apparatus comprising:

a centralized cache; and

a cache master, coupled to said local cache, for updating said centralized cache in accordance with a metric that is based on most requested information from said local broadcaster.

**11.** A computer-readable medium having stored thereon a plurality of instructions, the plurality of instructions including instructions which, when executed by a processor, cause the processor to perform the steps comprising of:

(a) maintaining a centralized cache at the regional broadcaster; and

(b) updating said centralized cache in accordance with a metric that is based on most requested information from said local broadcaster.

**FIG. 1**

EP 1 049 028 A2

**FIG. 2**

REGIONAL BROADCASTER
110

CPU
(CLUSTER COMPUTER)
114

SATELLITE
LINK
112

MEMORY
310

BASE OS
312

CACHE MASTER
314

DATABASE MANAGER
316

SATELLITE DATA
MANAGER
318

I/O DEVICES
320

STORAGE 322

CACHE
DATABASE
324

HTTP
SERVER
330

307

WEB

*FIG. 3*

13

| RANK | SITE | HITS/DAY |
|------|------|----------|
| 1 | YAHOO.COM | 29,531,257 |
| 2 | AOL.COM | 18,041,143 |
| 3 | EBAY.COM | 13,074,857 |
| 4 | NETSCAPE.COM | 12,485,829 |
| 5 | GEOCITIES.COM | 9,629,800 |
| 6 | MICROSOFT.COM | 9,475,071 |
| 7 | EXCITE.COM | 9,176,029 |
| 8 | HOTMAIL.COM | 6,014,357 |
| 9 | MSN.COM | 4,619,550 |
| 10 | INFOSEEK.COM | 4,479,639 |
| 11 | ATT.NET | 4,206,043 |
| 12 | DIGITAL.COM | 3,367,929 |
| 13 | LYCOS.COM | 2,970,057 |
| 14 | BLUEMOUNTAIN.COM | 2,770,625 |
| 15 | PRODIGY.NET | 2,633,857 |

## FIG. 4

FIG. 6

36 CATEGORIES WEB DATA

CATEGORY PROB / CUM CATEGORY PROB

- — CATEGORY PROB
- --□-- CUM CATEGORY PROB

**FIG. 5**

SITES CDF BY CATEGORY, RANKED BY SITES PER CATEGORY
(7.7M HITS, 6K SITES, 7 CATEGORIES)

```
─□─ INSURANCE CDF
─▲─ AGRICULTURE CDF
─○─ TOURISM CDF
─+─ HACKING CDF
─*─ ARTS CDF
─◇─ GAMES CDF
─── ADULT CDF
─■─ TOP CDF
─ ─ ALL SITES MODEL
```

**FIG. 7**

EXPONENTIAL FIT TO CATEGORY OF SITES
$le^{-ix}$ NORMALIZED, l=0.07388

**FIG. 8**

```
---- EXPONENTIAL FIT
──── ACTUAL WEB SITE DATA
```

─940

─930

STATISTICS CACHE RANKING TABLE

CATEGORIES

CAT: TOP SITES

CAT: GOV

CAT: SPORTS

CAT: SHOP

| RANK | SITE | CATEGORY | HITS | PAGES |
|------|--------|----------|------|-------|
| 1 | AB.COM | SHOP | 987 | 200 |
| 2 | CD.GOV | GOV | 943 | 75 |
| 3 | EF.NET | ISP | 912 | 200 |
| . | . | . | . | . |
| . | . | . | . | . |
| . | . | . | . | . |
| 456 | YZ.COM | SEARCH | 369 | 139 |
| . | . | . | . | . |
| UN | QR.GOV | GOV | 482 | 200 |
| UN | ST.COM | SPORTS | 217 | 125 |
| UN | UV.COM | TRAVEL | 691 | 50 |

─910

LONG TERM
STORAGE
(e.g., DISK)

TOP SITES

CATEGORIZED
SITES

NEW CACHE
CANDIDATES

FAST ACCESS STORAGE
(e.g., MEMORY) ─920

TOP SITES (LONG
TERM ALLOCATION TO
FAST STORAGE)

RECENT CATEGORIZED
SITES (SWAPPED INTO
FAST STORAGE)

RECENT NEW SITES
(NEW CACHE
CANDIDATES)

**FIG. 9**

ACTUAL vs MODEL DATA, WEB DOCUMENTS

AVG # DOCS PER SITE
SAMPLE 1 = 190
SAMPLE 2 = 195

NUMBER OF DOCUMENTS PER SITE

— INTERESTING DOCS MODEL
▲ TOTAL DOCS ACTUAL
● TOTAL DOCS ACTUAL.2

**FIG. 10**

HOT SPOTS - WORST CASE DAY & HOUR
(FOR SITES > 600 HITS/HR OR > 20K HITS/DAY)

SAMPLE SIZE = 34

AVG = 6.2

**FIG. 11**

_1200_

START —1205

RANK/REFRESH ORDER OF WEB
SITE BASED ON WEB SITE HITS
_1210_

APPLY CURVE FITTING
_1220_

NEW SITE>
THRESHOLD?
_1230_ — NO → ERACE FROM
TEMP LONG
TERM STORAGE
_1240_

YES

ADD NEW SITES TO CACHE
_1250_

EXCEED TOTAL
CACHE STORAGE?
_1260_ — NO

YES

DELETE INDIVIDUAL PAGE
_1270_

END OF PERIOD?
_1260_ — NO

YES

END —1285

**FIG. 12**